# EUROPEAN PATENT APPLICATION

(11) **EP 1 239 653 A2**
(43) Date of publication of application: **11.09.2002**
(21) Application number: 02005108.2
(22) Date of filing: 07.03.2002
(51) Int. Cl.: H04M 11/06

(54) **Method, apparatus and transmission equipment for signal discrimination**

(30) Priority: 09.03.2001 JP 2001067340
(71) Applicant: MITSUBISHI DENKI KABUSHIKI KAISHA, Tokyo 100-8310 (JP)
(72) Inventor: Sugino, Yukimasa, Chiyoda-ku, Tokyo 100-8310 (JP)
(74) Representative: Pfenning, Meinig & Partner

(57) **Abstract**

The signal discrimination result is prevented from becoming the "voice" during the transmission of the modem signal by the V.34 modulation system.

The 2400 Hz detection portion for detecting the 2400 Hz tone signal from the input signal, the ANSam signal detection portion for detecting the specific signal used in the start-up procedure of the V.34 modem signal from the input signal and the voice/data discrimination portion for classifying the type of the input signal based on the outputs of the 2400 Hz detection portion and the ANSam signal detection portion are provided, and in the case where the specific signal has not been detected, the signal discrimination result in the case where the 2400 Hz tone signal is detected is made to be the voice state, while in the case where the specific signal has been detected, the signal discrimination result in the case where the 2400 Hz tone signal is detected is not made to be the voice state.

## Description

This application is based on Application No. 2001-67340, filed in Japan on March, 9, 2001, the contents of which are hereby incorporated by reference.

### BACKGROUND OF THE INVENTION

### Field of the Invention

The present invention relates to a signal discrimination apparatus and a signal discrimination method which classifies a type of a signal transmitted on a telephone line into a voice signal and a voice-band data signal, and a transmission equipment using this signal discrimination apparatus.

### Description of the Prior Art

As for the equipment, which adopts the signal discrimination apparatus and transmits a voice-band signals, there is, for example, a Digital Circuit Multiplication Equipment (hereinafter, referred to as DCME) as disclosed in Japanese Patent Laid-Open No. 9-312705.

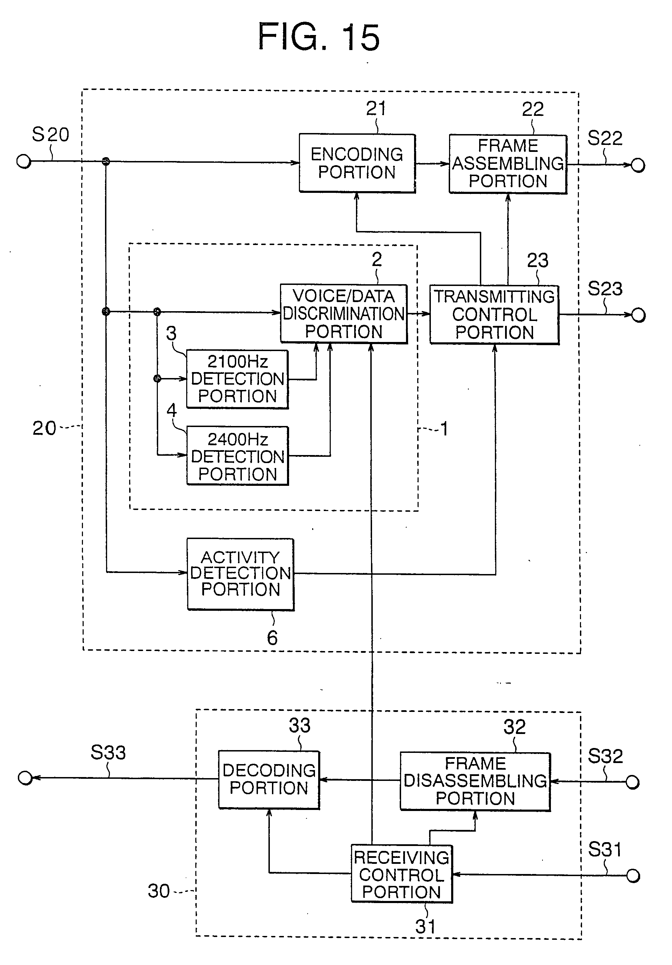

FIG. 15 is a block diagram showing one example of a constitution of the DCME, and shows components necessary for the description of the embodiments to be described below based on the block diagram of the conventional DCME disclosed in Japanese Patent Laid-Open No. 9-312705.

In the drawing, S20 denotes input signals of M channels to the DCME, 6 denotes an activity detection portion for judging whether each input signal S20 of M channels is in an active state or an inactive state and outputting the judgment result, 1 denotes a signal discrimination portion, 2 denotes a voice/data discrimination portion for judging whether each input signal S20 of M channels is a voice signal or a voice-band data signal and outputting the judgment result, 23 denotes a transmitting control portion for controlling an encoding portion 21 and a frame assembling portion 22 to be described later based on the activity detection result and a signal discrimination result and outputting a control information S23 to an opposed equipment side (not shown. equipment having the same constitution as the equipment shown in FIG. 15).

The encoding portion 21 has the m number of encoders and encodes the signals of m channels out of the input signals S20 of M channels in a low bit rate encoding fashion according to the instruction of the transmitting control portion 23.

Further, the frame assembling portion 22 assigns the encoded signals of m channels to the bits within a predetermined DCME frame according to the instruction of the transmitting control portion 23 and outputs this assembled DCME frame to the opposed equipment side. 3 denotes a 2100 Hz detection portion for judging the presence or absence of the 2100 Hz tone for the input signals S20 and outputs the judgment result. 4 denotes a 2400 Hz detection portion for judging the presence or absence of the 2400 Hz tone for the input signals S20 and outputs the judgment result. The function of a transmitting unit 20 of the DCME is realized by the activity detection portion 6, the voice/data discrimination portion 2, the transmitting control portion 23, the encoding portion 21, the frame assembling portion 22, the 2100 Hz detection portion 3 and the 2400 Hz detection portion 4.

Further, 31 denotes a receiving control portion for controlling a decoding portion 33 and a frame disassembling portion 32 to be described later based on the control information S31 received from the opposed equipment side. The frame disassembling portion 32 disassembles a DCME frame S32 received from the opposed equipment side into encoded signals, according to the instruction of the receiving control portion 31, and outputs them to the decoding portion 33. The decoding portion 33 has the m number of decoders and decodes the encoded signals of m channels according to the instruction of the receiving control portion 31. The function of the receiving unit 30 of the DCME is realized by the receiving control portion 31, the frame disassembling portion 32 and the decoding portion 33.

Next, the action of the transmitting unit 20 of the DCME shown in FIG. 15 will be described.

It is known that there exists about 60 to 70% silent time out of the whole calling time in conversational speech signals such as telephone communication because one listens to another's speech without speaking. Therefore, it is possible to increase efficiency of transmission by connecting a communication line of m (m<M) channels with signals of active speech channel out of input signals S20 of M channels and transmitting them. In the DCME, the activity detection portion 6 judges whether it is active or inactive for each input signals S20 of M channels and transmits the judgment result to the transmitting control portion 23, and based on this judgment result, the transmitting control portion 23 notifies the encoding portion 21 about the control information regarding the assignment of the input channels to the encoders so that the channels judged as active within the input signals S20 of M channels are assigned to the m number (m is a value smaller than M) of the encoders in the encoding portion 21 at a first priority.

Further, the encoding portion 21 encodes the input signal assigned to the m number of encoders in a low bit rate encoding fashion and outputs the encoded signals. As for an encoding algorism used by this encoding portion 21, there is, for example, an Adaptive Differential Pulse Code Modulation (hereinafter, referred to as ADPCM) system which is prescribed in an ITU-T Recommendation G. 726, and in this ADPCM system, the input signal at a bit rate of 64 kbit/s can be encoded into any bit rate of 40 kbit/s, 32 kbit/s, 24 kbit/s or 16 kbit/s.

In the encoding portion 21, in the case where this ADPCM system is used, it is desirable that which encoding bit rate is selected is decided by whether the input signal is the voice signal or the voice-band data signal. In other words, in the case where the input signal is the voice signal, it is better to select a lower encoding bit rate, within the range of maintaining good speech quality for communication, for efficiently using the line. In this case, the encoding bit rate can be 32 kbit/s or lower. On the other hand, in the case where the input signal is the voice-band data signal, the higher encoding bit rate of 40 kbit/s is necessary so as not to cause a transmission error. In this way, in order to adequately set the encoding bit rate of the encoding portion 21, the voice/data discrimination portion 2 is necessary for judging whether the input signal is the voice signal or the voice-band data signal.

In the DCME shown in FIG. 15, the voice/data discrimination portion 2 judges whether each input signal S20 of M channels is the voice signal ("voice") or the voice-band data signal ("data"), and the judgment result thereof is sent to the transmitting control portion 23, and based on this judgment result, the transmitting control portion 23 notifies the encoding portion 21 about the control information regarding the encoding bit rate of the encoders so that the encoding bit rate of the encoders in the encoding portion 21, which is assigned to the channels judged to be the "data", is set to 40 kbit/s, and the encoding bit rate of the encoders in the encoding portion 21, which is assigned to the channels judged to be the "voice", is set to any one of 32 kbit/s, 24 kbit/s, 16 kbit/s.

The transmitting control portion 23 also notifies the frame assembling portion 22 about the control information regarding the assignment of the encoded signals of each channel outputted from the encoding portion 21 to the predetermined bits in the DCME frame, and the frame assembling portion 22 performs the assignment of the above described encoded signals of each channel to the above described bits in the DCME frame based on the control information and transmits the assembled data of the DCME frame S22 to the opposed equipment side.

Further, the transmitting control portion 23 transmits the control information S23 to the opposed equipment side regarding the assignment of the input signals of M channels to the encoders, the encoding bit rate in the ADPCM encoding, and the assignment of the encoded signals to the bits in the DCME frame.

Note that the voice/data discrimination portion 2 inputs the output of the 2100 Hz detection portion 3, the output of the 2400 Hz detection portion 4 and the output of the receiving control portion 31, and resets the judgment result to the "voice" or "data" based on these signals.

First, the 2100 Hz detection portion 3 judges whether a tone signal of the 2100 Hz exists or not in the input signals S20 by performing a process such as a frequency analysis for the input signals S20, and outputs "1" when the 2100 Hz tone signal exists and outputs "0" when it does not exist as a 2100 Hz detection result. The voice/data discrimination portion 2 inputs the 2100 Hz detection result, and when the 2100 Hz tone is detected, sets the judgment result to the "data".

Further, the 2400 Hz detection portion 4 judges whether the tone signal of the 2400 Hz exists or not in the input signals S20 by performing a process such as the frequency analysis for the input signals S20, and outputs "1" when the 2400 Hz tone exists and outputs "0" when it does not exist as a 2400 Hz detection result. The voice/data discrimination portion 2 inputs the 2400 Hz detection result, and when the 2400 Hz tone is detected, resets the judgment result to the "voice".

Further, the voice/data discrimination portion 2 inputs a discrimination state of the receiving side signal from the receiving control portion 31, and when a leading edge from "0" (voice) to "1" (data) of the discrimination state of the receiving side signal is detected, sets its judgment result to the "data".

Next, the action of the receiving unit 30 of the DCME shown in FIG. 15 will be described.

The receiving control portion 31 receives various types of the control information S31 transmitted by the transmitting control portion of the opposed equipment side, and based on various types of the control information, transmits the control information to the frame disassembling portion 32 and the decoding portion 33.

Further, the receiving control portion 31 judges whether the discrimination state of the receiving side signal is the "voice" or the "data" based on the received control information S31 regarding the encoding bit rate of the ADPCM encoding and outputs the result to the voice/data discrimination portion 2. This output is used for setting to the "data" of the judgment result in the voice/data discrimination portion 2 as described earlier.

The frame disassembling portion 32 receives the control information regarding the assignment of the bits in the DCME frame received from the opposed equipment side to the encoded data outputted to the decoding portion 33, and based on this control information, disassembles the DCME frame S32 received from the opposed equipment side and outputs the encoded signal to the decoding portion 33.

Next, the decoding portion 33 receives the control information regarding the encoding bit rate of each channel and the control information regarding the assignment of the m number of decoders in the decoding portion 33 to the outputs of M channels from the DCME, and based on these control informations, assigns the encoded signals received from the frame disassembling portion 32 to any one of the m number of decoders 33 so as to be decoded by an adequate encoding bit rate and assigns the decoded signals of each channel to any one of M channels of the outputs from the DCME and outputs them as output signals S33.

In recent years, transmission rate of a facsimile modem and data modem is increasing, and a modem adopting a V.34 modulation system having a transmission rate of 28.8 kbit/s in addition to V.17, V.29, V.27ter, V.21 is developed. For example, when a data modem terminal, which adopts the V.34 modulation system as a call terminal and an answer terminal, is connected to the conventional DCME, for the reason to be described below, there arises a problem that a transmission error occurs.

Hereinafter, the reason why such a problem occurs will be described.

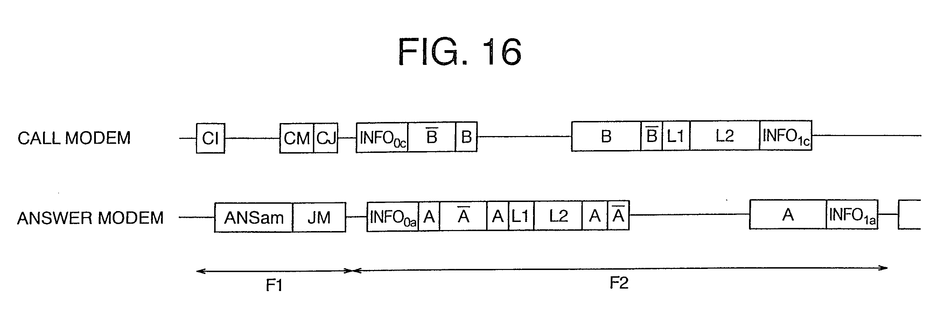

FIG. 16 shows a start-up sequence in a modem communication procedure by the V.34 modulation system.

In the drawing, each signal of a phase 1 (shown by F1 in the drawing) is defined in the ITU-T Recommendation V.8 as follows. A CI signal is referred to as a call indicator signal, modulated by V.21 channel No. 1 (low-band channel) at 300 bit/s. ANSam signal is referred to as modified answer tone signal, a signal in which a 2100 Hz sine wave is phase-reversed at 450 ms intervals and is further amplitude-modulated by 15 Hz. CM signal is referred to as a call menu signal, a signal which indicates a modulation system available in the call terminal, modulated by a V.21 channel No. 1 (low-band channel) at 300 bit/s. JM signal is referred to as a joint menu signal, a signal which indicates a modulation system available jointly in a call terminal and an answer terminal, modulated by a V.21 channel No. 2 (high-band channel) at 300 bit/s. CJ signal is referred to as a CM terminator, a signal which acknowledges the detection of the JM signal and indicates the end of the CM signal, modulated by a V.21 channel No. 1 (low-band channel) at 300 bit/s.

Further, in each signal of a phase 2 (shown by F2 in the drawing), a tone A is a tone of the 2400 Hz sent from an answer modem. A tone B is a tone of 1200 HZ sent from a call modem. An INFO sequence is a signal used to exchange modem capabilities, results of line probing and data mode modulation parameters and is sent by using a binary DPSK modulation at 600 bit/s ±0.01 %. Further, the INFO sequence uses two sets of (INFO0a, INFO0c) and (INFO1a, INFO1c). ("a" means the sequence sent by the answer modem and "c" means the INFO sequence sent by the call modem.)

In the case where the modem signal in V.34 modulation system as described above is inputted to the DCME having the constitution of FIG. 15, the tone A sent from the answer modem, that is, the tone of 2400 Hz is detected by the 2400 Hz detection portion 4, and in this way, the voice/data discrimination portion 2 resets the discrimination result to the "voice". Then, the encoding bit rate of an encoder within the encoding portion 21 is set to any one of 32 kbit/s, 24 kbit/s, 16 kbit/s and there arises a possibility of occurring the transmission error of the modem signal.

In the ITU-T Recommendation G.763 that prescribes the required specification of the DCME, it is prescribed that the signal discrimination apparatus judges the signal type as the "voice" when a tone signal of 2400 Hz is inputted. The reason why there is such a requirement is because the tone signal of 2400 Hz is used for a tone of the line signal of No. 5 signalling and a channel check test signal, and these signals should be judged as the "voice" in order to transmit them at any bit rate of 32 kbit/s, 24 kbit/s or 16 kbit/s. However, the tone of 2400 Hz is used also for the start-up procedure of a V.34 modem, and in the case where the signal discrimination apparatus is designed conforming to the requirement of G.763, the tone is judged as the "voice" for the 2400 Hz tone during the communication of the V.34 modem, and therefore, there arises a problem of occurring the transmission error of the modem signal.

This invention has been carried out in order to solve such a problem and it is the object of the invention to provide the signal discrimination apparatus and the signal discrimination method and the transmission equipment which can prevent the signal discrimination result from becoming the "voice" during the transmission of the modem signal by the V.34 modulation system and can normally transmit the V.34 modem signal.

### SUMMARY OF THE INVENTION

The signal discrimination apparatus according to claim 1, in the signal discrimination apparatus for classifying the type of the input signal into two types of the voice and the data, comprises: first detection means for detecting a tone signal of a specific frequency from the above described input signal; second detection means for detecting a specific signal used in the start-up procedure of the modem signal from the above described input signal; and discrimination means for classifying the type of the above described input signal based on the outputs of the above described first and second detection means, wherein, when the above described specific signal has not been detected, the signal discrimination result in the case of the above described tone signal being detected is made to be the voice state, and when the above described specific signal has been detected, the signal discrimination result in the case of the above described tone signal being detected is not made to be the voice state.

The signal discrimination apparatus according to the invention of claim 2 is a signal discrimination apparatus, wherein the above described start-up procedure is a V.34 procedure.

The signal discrimination apparatus according to the invention of claim 3 is a signal discrimination apparatus, wherein the above described start-up procedure is a V.8 procedure.

The signal discrimination apparatus according to the invention of claim 4 is a signal discrimination apparatus, wherein the above described second detection means is an ANSam signal detector for detecting an ANSam signal in the V.8 procedure.

The signal discrimination apparatus according to the invention of claim 5 is a signal discrimination apparatus, which uses the third detection means for detecting a tone signal of the specific frequency from the above described input signal instead of the above ANSam signal detector.

The signal discrimination apparatus according to the invention of claim 6 is a signal discrimination apparatus, wherein the tone signal of the specific frequency which the above described third detection means detects is the tone signal of 2100 Hz.

The signal discrimination apparatus according to the invention of claim 7 is a signal discrimination apparatus, wherein the above described second detection means is a V.21 modem signal detector for detecting a V.21 (channel No. 2) modem signal of the V.8 procedure.

The signal discrimination apparatus according to the invention of claim 8 is a signal discrimination apparatus, wherein the above described second detection means is a JM signal detector for detecting a JM signal in the V.8 procedure.

The signal discrimination apparatus according to the invention of claim 9 is a signal discrimination apparatus, wherein the above described second detection means is an INFO0a signal detector for detecting an INFO0a signal in the start-up procedure.

The signal discrimination apparatus according to the invention of claim 10 comprises an activity detector for judging an active/inactive state of the above described input signal, wherein, after the specific signal used in the start-up procedure of the modem signal has been detected, when the inactive state continues for a predetermined time, a detection state of the above described specific signal is initialized.

The signal discrimination apparatus according to the invention of claim 11 comprises a first activity detector for judging the active/inactive state of a transmitting side signal, a second activity detector for judging the active/inactive state of a receiving side signal, wherein, after the specific signal used in the start-up procedure of the modem signal has been detected, when both the transmitting side and the receiving side continue to be in an inactive state for a predetermined time, the detection state of the above described specific signal is initialized.

The signal discrimination apparatus according to the invention of claim 12 comprises a continuity check test tone detector for detecting the tone signal of the specific frequency sent for the purpose of the continuity check test of the channel from the above described input signal, wherein, after the specific signal used in the start-up procedure of the above described modem signal has been detected, when the tone signal of the specific frequency sent for the continuity check test of the above described channel is detected, the detection state of the above specific signal is initialized.

The signal discrimination apparatus according to the invention of claim 13 is a signal discrimination apparatus, wherein the tone signal of the specific frequency which the above described first detection means detects is a tone signal of 2400 Hz.

The signal discrimination method according to the invention of claim 14, in the signal discrimination method for classifying the type of the input signal into two types of the voice and the data, includes: a first step of detecting the tone signal of the specific frequency from the above described input signal; a second step of detecting the specific signal used in the start-up procedure of the modem signal from the above described input signal; and a third step of setting a specific signal detection flag when the above specific signal is detected, wherein, when the above described specific signal detection flag is not set, the signal discrimination result in the case of the tone signal of the above described specific frequency being detected is made to be the voice state, and when the above described specific signal detection flag is set, the signal discrimination result in the case of the tone signal of the above specific frequency being detected is not made to be the voice state.

The signal discrimination method according to the invention of claim 15 is a signal discrimination method, wherein the above described start-up procedure is the V.34 procedure.

The signal discrimination method according to the invention of claim 16 is a signal discrimination method, wherein the above described start-up procedure is the V.8 procedure.

The signal discrimination method according to the invention of claim 17 is a signal discrimination method, wherein the above described specific signal is the ANSam signal in the V.8 procedure.

The signal discrimination method according to the invention of claim 18 is a signal discrimination method, wherein the above specific signal is the V.21 (channel No. 2) modem signal in the V.8 procedure.

The signal discrimination method according to the invention of claim 19 is a signal discrimination method, wherein, the above specific signal is the INFO0a signal in the start-up procedure.

The signal discrimination method according to the invention of claim 20 is a signal discrimination method, wherein, after the specific signal used in the start-up procedure of the above described modem signal has been detected, when both the transmitting side and the receiving side continue to be in an inactive state for a predetermined time, the detection state of the above described specific signal is initialized.

The signal discrimination method according to the invention of claim 21 includes a fourth step of detecting the tone signal of the specific frequency sent for the purpose of the continuity check test of the channel from the above described input signal, wherein, after the specific signal used for the start-up procedure of the above described modem signal has been detected, when the tone signal of the specific frequency sent for the purpose of the continuity check test of the above described channel is detected, the detection state of the above described specific signal is initialized.

The signal discrimination method according to the invention of claim 22 is a signal discrimination method, wherein the tone signal of the specific frequency detected by the above described first step is a tone signal of 2400 Hz.

The transmission equipment according to the invention of claim 23 comprises: the signal discrimination apparatus according to claim 1, which classifies the type of the input signal into two types of the voice and the data; encoding means for encoding input signal at an adequate encoding bit rate in a low bit rate encoding fashion based on the signal discrimination result of the above described signal discrimination apparatus; transmitting means for transmitting encoded data encoded by the encoding means; receiving means for receiving the encoded data sent by the opposed equipment side; and decoding means for decoding the encoded data received from the receiving means.

### BRIEF DESCRIPTION OF THE DRAWINGS

FIG. 1 is a block diagram showing a first embodiment of the invention;
FIG. 2 is a flowchart for explaining an action of a voice/data discrimination portion 2A in FIG. 1;
FIG. 3 is a view for explaining the action in the case where a V.34 modem signal is inputted to a signal discrimination portion 1A in FIG. 1;
FIG. 4 is a block diagram showing a second embodiment of the invention;
FIG. 5 is a flowchart for explaining the action of the voice/data discrimination portion 2A in FIG. 4;
FIG. 6 is a view for explaining the action in the case where the V.34 modem signal is inputted to an signal discrimination portion 1B in FIG. 4;
FIG. 7 is a block diagram showing a fourth embodiment of the invention;
FIG. 8 is a flowchart for explaining the action of a voice/data discrimination portion 2C in FIG. 7;
FIG. 9 is a view for explaining the action in the case where the V.34 modem signal is inputted to a signal discrimination portion 1C in FIG. 7;
FIG. 10 is a block diagram showing a fifth embodiment of the invention;
FIG. 11 is a flowchart for explaining the action of the voice/data discrimination portion 2C in FIG. 10;
FIG. 12 is a view for explaining the action in the case where the V.34 modem signal is inputted to the signal discrimination portion 1C in FIG. 10;
FIG. 13 is a block diagram showing a seventh embodiment of the invention;
FIG. 14 is a block diagram showing an eighth embodiment of the invention;
FIG. 15 is a block diagram showing one example of the constitution of the conventional DCME; and
FIG. 16 is a view showing a start-up sequence in a modem communication procedure by a V.34 modulation system.

### DETAILED DESCRIPTION OF THE PREFERRED EMBODIMENTS

Hereinafter, the embodiments of the present invention will be described based on the drawings.

### First Embodiment

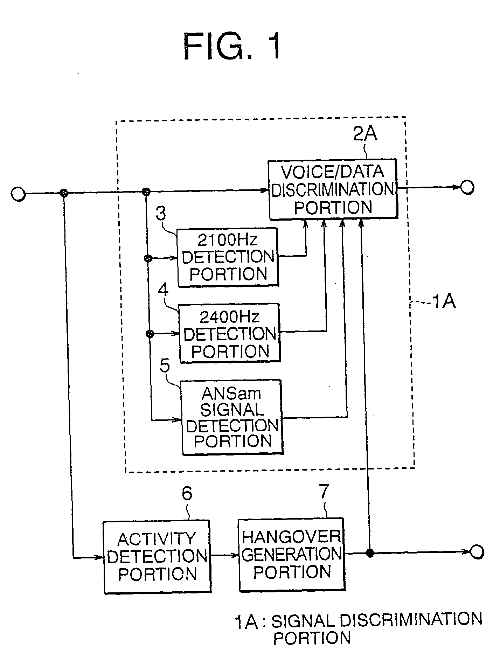

FIG. 1 is a block diagram showing a constitution of the first embodiment of the present invention.

In the drawing, 1A denotes a signal discrimination portion, 2A a voice/data discrimination portion as discrimination means, 3 a 2100 Hz detection portion, 4 a 2400 Hz detection portion as a first detection means, 5 an ANSam signal detection portion (ANSam signal detector) as a second detection means, 6 an activity detection portion (activity detector) and 7 a hangover generation portion. Note, here, components 1A, 6 and 7 substantially constitute the signal discrimination apparatus.

Next, the action of FIG. 1 will be described.

An input signal from a terminal side is inputted to a signal discrimination portion 1A, and a detection and analysis processing of the signal is performed in each portion of the voice/data discrimination portion 2A, the 2100 Hz detection portion 3, the 2400 Hz detection portion 4 and the ANSam signal detection portion 5 in the signal discrimination portion 1A. Further, the input signal from the terminal side is inputted to the activity detection portion 6 and the judgement is made whether the input signal is in an active state or an inactive state.

The 2100 Hz detection portion 3 performs, for example, a frequency analysis for the input signal so as to judge the presence or absence of the tone signal of 2100 Hz and outputs the judgment result to the voice/data discrimination portion 2A.

The 2400 Hz detection portion 4 performs, for example, the frequency analysis for the input signal so as to judge the presence or absence of the tone signal of 2400 Hz and outputs the judgment result to the voice/data discrimination portion 2A.

The ANSam signal detection portion 5 performs, for example, the frequency analysis and the analysis of a signal strength for the input signal so as to judge the presence or absence of the amplitude-modulated tone signal of 2100 Hz, which is called as ANSam signal and outputs the judgment result to the voice/data discrimination portion 2A.

The activity detection portion 6 performs, for example, the measurement of the signal strength of the input signal so as to judge whether the input signal is in an active state or inactive state, and outputs the judgment result to the hangover generation portion 7.

The hangover generation portion 7 performs a hangover generation processing which maintains an active state during a predetermined time after the change from the active state to inactive state of the output of the activity detection portion 6, and outputs the active/inactive judgment result after the hangover generation processing to the voice/data discrimination portion 2A. It is necessary that this hangover time (the above described predetermined time) is set to the value longer than an inactive duration during the transmission of the V.34 modem signal so that the active state is maintained during the transmission of the V.34 modem signal.

The voice/data discrimination portion 2A performs, for example, the analysis of the zero-crossing rate and the signal strength for the input signal so as to judge whether the type of the input signal is a voice signal ("voice") or a voice-band data signal ("data") and outputs the judgment result.

Further, the voice/data discrimination portion 2A inputs the judgment result of each portion of the 2100 Hz detection portion 3, the 2400 Hz detection portion 4, the ANSam signal detection portion 5 and the hangover generation portion 7 and performs the resetting of a signal discrimination state to the "voice" or the "data" according to the inputted judgment result.

The voice/data discrimination portion 2A first sets the signal discrimination state to the "data" in the case where the 2100 Hz tone is detected.

Further, in the case where the 2400 Hz tone is detected, when the ANSam signal has already been detected, the voice/data discrimination portion 2A judges that it is the tone of 2400 Hz sent in a data call by the V.34 modem and sets the signal discrimination state to the "data". On the other hand, in the case where the ANSam signal has not yet been detected, the voice/data discrimination portion 2A judges that it is not the tone used in the data call by the V.34 modem, but, for example, the tone signal of 2400 Hz used in a line signalling of No. 5 signalling or a channel check test, and rests the signal discrimination state to the "voice".

The judgment result of the active/inactive state from the hangover generation portion 7 is used for detecting the end of data call by the V.34 modem in the voice/data discrimination portion 2A.

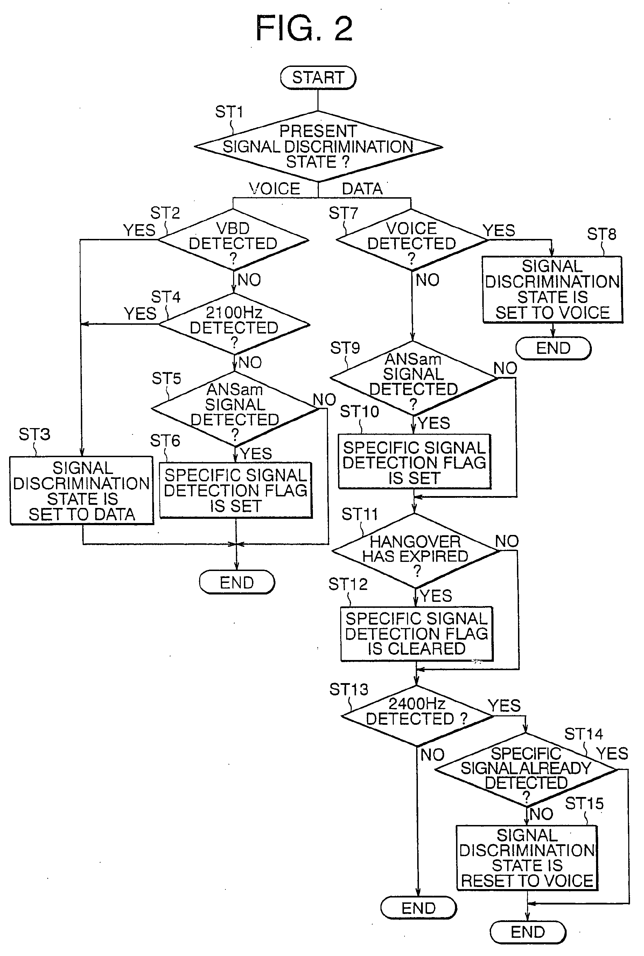

FIG. 2 is a flowchart to explain the action of the voice/data discrimination portion 2A.

When the voice/data discrimination portion 2A starts the processing, it first checks the present signal discrimination state (step ST1), and in the case where the state is a "voice" state, advances to step ST2, and in the case where the state is a "data" state, advances to step ST7.

First, in the case where the present signal discrimination state is the "voice", the voice/data discrimination portion 2A performs, for example, the analysis of the zero-crossing rate and the signal strength for the input signal so as to judge the presence or absence of the voice-band data signal (VBD) (step ST2), and in the case where the voice-band data signal is detected, sets the signal discrimination state to the "data" (step ST3), and completes the processing.

In step ST2, in the case where the voice-band data signal is not detected, next, the voice/data discrimination portion 2A checks the judgment result of the presence or absence of the 2100 Hz tone inputted from the 2100 Hz detection portion 3 (step ST4), and in the case where the 2100 Hz tone is detected, sets the signal discrimination state to the "data" (step ST3), and completes the processing.

In step ST4, in the case where the 2100 Hz tone is not detected, next, the voice/data discrimination portion 2A checks the judgment result of the presence or absence of the ANSam signal inputted from the ANSam signal detection portion 5 (step ST5), and in the case where the ANSam signal is detected, sets a specific signal detection flag to 1 (step ST6), and completes the processing.

In step ST5, in the case where the ANSam signal is not detected, the processing completes leaving the discrimination state as it is.

Next, in the case where the present signal discrimination state is "data", the voice/data discrimination portion 2A performs, for example, the analysis of the zero-crossing rate and the signal strength for the input signal so as to judge the presence or absence of the voice signal (step ST7), and in the case where the voice signal is detected, resets the signal discrimination state to the "voice" (step ST8), and completes the processing.

In step ST7, in the case where the voice signal is not detected, next, the voice/data discrimination portion 2A checks the judgment result of the presence or absence of the ANSam signal inputted from the ANSam signal detection portion 5 (step ST9), and in the case where the ANSam signal is detected, sets the specific signal detection flag (step ST10).

Next, the voice/data discrimination portion 2A checks the judgment result of the active/inactive state after the hangover generation processing inputted from the hangover generation portion 7 (step ST11), and in the case where the hangover time has expired and the state becomes inactive, clears the specific signal detection flag to zero (step ST12).

Next, the voice/data discrimination portion 2A checks the judgment result of the presence or absence of the 2400 Hz tone inputted from the 2400 Hz detection portion 4 (step ST13), and in the case where the 2400 Hz tone is detected, subsequently checks the state of the specific signal detection flag (step ST14), and in the case where the specific signal detection flag is not set to 1 (specific signal has not been detected yet), resets the signal discrimination state to the "voice" (step ST15), and completes the processing.

In step ST13, in the case where the 2400 Hz tone is not detected, the processing completes leaving the discrimination state as it is.

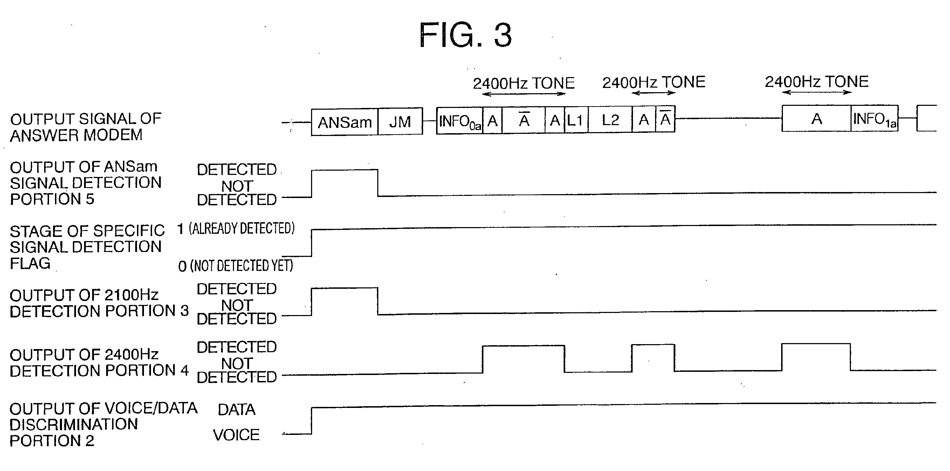

FIG. 3 is a view for explaining the action in the case where the V.34 modem signal is inputted to the signal detection portion 1A, and shows a state of each portion in the case where the output signal of the V.34 answer modem is inputted to the signal detection portion 1A.

In the drawing, when the answer modem sends the ANSam signal, since the ANSam signal is an amplitude-modulated tone signal of 2100 Hz and has a large power component at 2100 Hz, the 2100 Hz detection portion 3 detects the 2100 Hz tone, and in this way the voice/data detection portion 2A sets the discrimination result to the "data" state (steps ST3, ST4).

Further, since the ANSam signal detection portion 5 detects the ANSam signal, the specific signal detection flag is set (steps ST5, ST6 or steps ST9, ST10).

After that, since the 2400 Hz tone is sent from the answer modem, the 2400 Hz detection portion 4 detects the 2400 Hz tone, but since the specific signal detection flag is already set, the resetting of the signal discrimination state to the "voice" is not performed, and "data" state is maintained (steps ST13, ST14).

When the transmission of this V.34 modem signal completes, and after that, the inactive duration continues for more than a predetermined time, since the output of the hangover generation portion 7 becomes an inactive state, the specific signal detection flag is cleared to zero (steps ST11, ST12).

As described above, in the present embodiment, means for detecting the ANSam signal in the V.8 procedure, as the specific signal to be used in the start-up procedure of the V.34 modem signal, is provided, and in the case where the ANSam signal has been detected, the signal discrimination state is not reset to the "voice" even if the 2400 Hz tone is detected, so that there is the effect of preventing the signal discrimination result from becoming the "voice" during the transmission of the modem signal by the V.34 modulation system.

Note that, though the present embodiment described that the voice/data discrimination portion 2A performs the analysis of the zero-crossing rate and the signal strength for the input signal so as to judge whether the type of the input signal is the voice signal ("voice") or the voice-band data signal ("data") and the judgment result thereof is outputted, the judgment is not limited to this, but may judge by using other analyzing means.

Further, as for the detection algorism of each portion of the 2100 Hz detection portion 3, the 2400 Hz detection portion 4, the ANSam signal detection portion 5 and the activity detection portion 6, it is also not limited to the method described in the present invention.

### Second Embodiment

In the above described first embodiment, means for detecting the ANSam signal in the V.8 procedure, as the specific signal to be used in the start-up procedure of the V.34 modem signal, is provided, and in the case where the ANSam signal has been detected, the signal discrimination state is not reset to the "voice" even if the 2400 Hz tone is detected. However, not only the ANSam signal, but also other signal in the V.8 procedure, that is, the V.21 channel No. 2 modem signal may be detected.

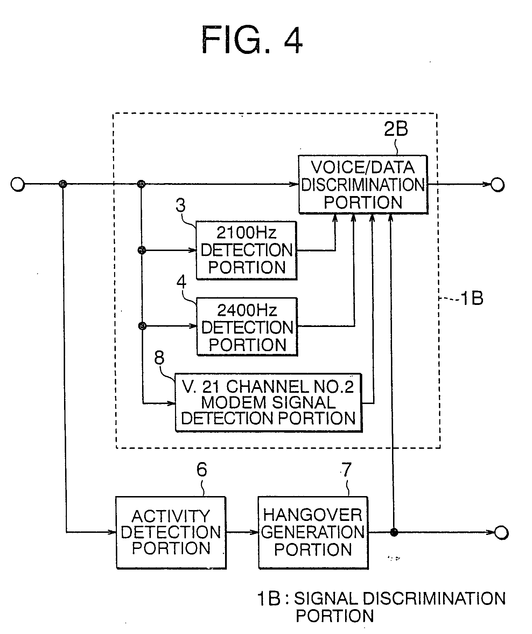

FIG. 4 is a block diagram showing the second embodiment of the present invention.

In the drawing, 1B denotes a signal discrimination portion, 2B a voice/data discrimination portion as discrimination means, 3 a 2100 Hz detection portion, 4 a 2400 Hz detection portion, 6 an activity detection portion, 7 a hangover generation portion, and 8 a V.21 channel No. 2 modem signal detection portion as second detection means. Note that, here, the components 1B, 6 and 7 substantially constitute the signal discrimination apparatus.

Next, the action of FIG. 4 will be described.

The actions of the 2100 Hz detection portion 3, the 2400 Hz detection portion 4, the activity detection portion 6 and the hangover generation portion 7 are the same as those of the first embodiment.

The V.21 channel No. 2 modem signal detection portion 8 judges the presence or absence of the modem signal which is modulated by the channel No. 2 system prescribed in an ITU Recommendation V.21 and outputs the judgment result to the voice/data discrimination portion 2B. A JM signal in a V.8 procedure is a signal modulated by a V.21 channel No. 2 system and uses 1750 Hz as a carrier frequency and it is the signal modulated by a FSK (frequency shift keying) system where a binary code [0/1] is corresponding to the frequency of ±100 Hz. Further, the data rate is 300 bit/s.

The voice/data discrimination portion 2B analyzes the input signal and judges whether the type of the input signal is a voice signal ("voice") or a voice band data signal ("data").

Further, the voice/data discrimination portion 2B inputs the judgment result of each portion of the 2100 Hz detection portion 3, the 2400 Hz detection portion 4, the activity detection portion 6, the hangover generation portion 7 and the V.21 channel No. 2 modem signal detection portion 8, and performs the resetting of the signal discrimination state to the "voice" or the "data" according to the inputted judgment result.

The voice/data discrimination portion 2B first sets the signal discrimination state to the "data" in the case where the 2100 Hz tone is detected.

Further, in the case where the 2400 Hz tone is detected, when the V.21 channel No. 2 modem signal has already been detected, the voice/data discrimination portion 2B judges that it is the 2400 Hz tone sent in a data call by the V.34 modem and sets the signal discrimination state to the "data". On the other hand, in the case where the V.21 channel No. 2 signal has not yet been detected, the voice/data discrimination portion 2B judges that it is not the tone used in the data call by the V.34 modem, but, for example, the tone signal of 2400 Hz used in a line signalling of No. 5 signalling or a channel check test, and resets the signal discrimination state to the "voice".

The judgment result of the active/inactive state from the hangover generation portion 7 is used for detecting the end of the data call by the V.34 modem in the voice/data discrimination portion 2B.

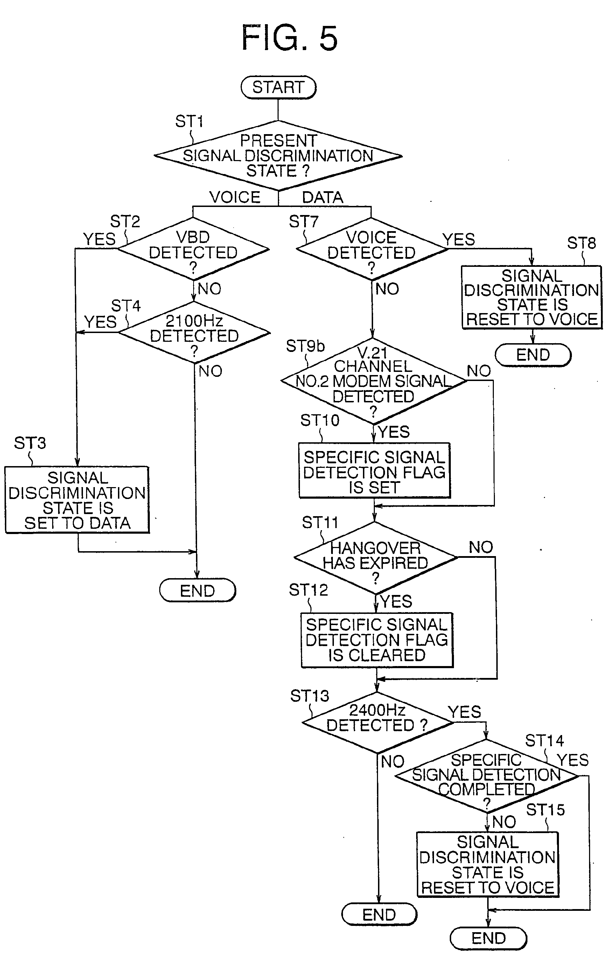

FIG. 5 is a flowchart for explaining the action of the voice/data discrimination portion 2B. Except for step ST9b in the drawing, the action is the same as the action of the above described embodiment 1 described by using FIG. 2.

In the above described first embodiment (FIG. 2), in steps ST5 and ST9, the voice/data discrimination portion 2A checks the judgment result of the presence or absence of the ANSam signal inputted from the ANSam signal detection portion 5, and in the case where the ANSam signal is detected, set the specific signal detection flag to 1. However, in the present embodiment (FIG. 5), in step ST9b, the voice/data discrimination portion 2B checks the judgment result of the presence or absence of the V.21 channel No. 2 modem signal inputted from the V.21 channel No. 2 modem signal detection portion 8, and in the case where the V.21 channel No. 2 modem signal is detected, sets the specific signal detection flag to 1.

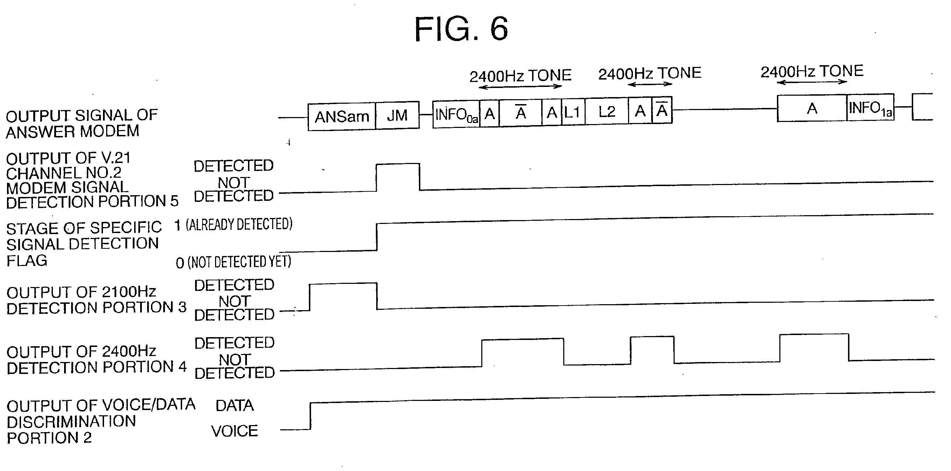

FIG. 6 is a drawing for explaining the action in the case where the V.34 modem signal is inputted to this signal discrimination portion 1B, and shows a state of each portion in the case where the output signal of the V.34 answer modem is inputted to this signal discrimination portion 1B.

In the drawing, when the answer modem sends the ANSam signal, since the ANSam signal is an amplitude-modulated tone signal of 2100 Hz and has a large power component at 2100 Hz, the 2100 Hz detection portion 3 detects the 2100 Hz tone, and in this way the voice/data discrimination portion 2B sets the discrimination result to the "data" state (steps ST3, ST4).

After that, since the JM signal modulated by the V.21 channel No. 2 system is sent from the answer modem, the V.21 channel No. 2 modem signal detection portion 8 detects the V.21 channel No. 2 modem signal, and the specific signal detection flag is set (steps ST9b, ST10).

After that, since the 2400 Hz tone is sent from the answer modem, the 2400 Hz detection portion 4 detects the 2400 Hz tone, but since the specific signal detection flag is already set, the resetting of the signal discrimination state to the "voice" is not performed and the "data" state is maintained (steps ST13, ST14).

When the transmission of this V.34 modem signal completes, and after that, the inactive duration continues for more than a predetermined time, since the output of the hangover genearation portion 7 becomes an inactive state, the specific signal detection flag is cleared to zero (steps ST11, ST12).

As described above, in the present embodiment, means for detecting the V.21 channel No. 2 modem signal in the V.8 procedure, as the specific signal to be used in the start-up procedure of the V.34 modem signal, is provided, and in the case where the V.21 channel No. 2 modem signal has been detected, the signal discrimination state is not reset to the "voice" even if the 2400 Hz tone is detected, so that there is the effect of preventing the signal discrimination result from becoming the "voice" during the transmission of the modem signal by the V.34 modulation system.

### Third Embodiment

In the above described second embodiment, means for detecting the V.21 channel No. 2 modem signal in the V.8 procedure, as the specific signal to be used in the start-up procedure of the V.34 modem signal, is provided, and in the case where the V.21 channel No. 2 modem signal has been detected, the signal discrimination state is not reset to the "voice" even if the 2400 Hz tone is detected. However, a configuration is also available wherein the V.21 channel No. 2 modem signal is demodulated, and the demodulated data is analyzed, and when a synchronization bits of the JM signal is detected a specified signal detection flag is set so that the signal discrimination state is not reset to the "voice" even if 2400 Hz tone is detected.

By so doing, similar to the above described second embodiment, there is the effect of preventing the signal discrimination result from becoming the "voice" during the transmission of the modem signal by the V.34 modulation system.

### Fourth Embodiment

In the above described first and second embodiments, means for detecting the signal (ANSam signal or V.21 channel No. 2 modem signal) in the V.8 procedure, as the specific signal to be used in the start-up procedure of the V.34 modem signal, is provided, and in the case where the signal in the V.8 procedure has been detected, the signal discrimination state is not reset to the "voice" even if the 2400 Hz tone is detected. However, not only the signal in the V.8 procedure, but also other signal used in the start-up procedure of the V.34 modem signal, that is, the INFO0a signal may be detected.

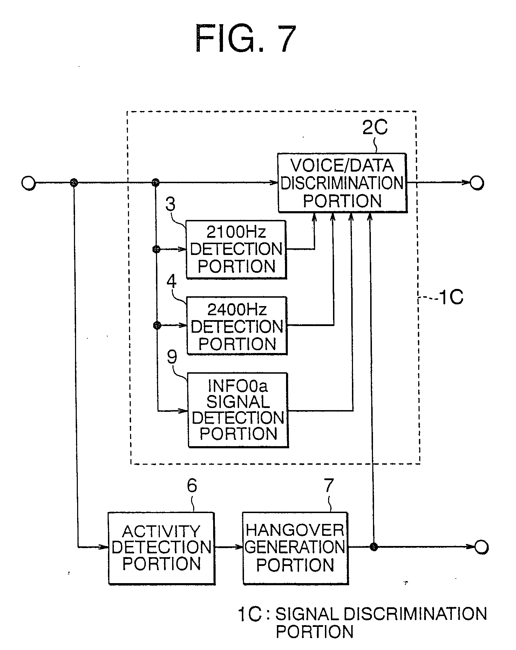

FIG. 7 is a block diagram showing the fourth embodiment of the invention.

In the drawing, 1C denotes a signal discrimination portion, 2C a voice/data discrimination portion as discrimination means, 3 a 2100 Hz detection portion, 4 a 2400 Hz detection portion, 6 an activity detection portion, 7 a hangover generation portion, and 9 an INFO0a signal detection portion as second detection means. Note that, here, the components 1C, 6 and 7 substantially constitute a signal discrimination apparatus.

Next, the action of FIG. 7 will be described.

The actions of the 2100 Hz detection portion 3, the 2400 Hz detection portion 4, the activity detection portion 6 and the hangover generation portion 7 are the same as those of the above described first embodiment.

The INFO0a signal detection portion 9 judges the presence or absence of the INFO0a signal in the signal of the phase 2 (F2 in FIG. 16) of the start-up sequence in the modem communication procedure by the V.34 modulation system and outputs the judgment result to the voice/data discrimination portion 2C. The INFO0a signal is a signal sent by using the binary DPSK modulation at 600 bit/s ±0.01 %.

The voice/data discrimination portion 2C analyzes the input signal and judges whether the type of the input signal is a voice signal ("voice") or a voice-band data signal ("data").

Further, the voice/data discrimination portion 2C inputs the judgment result of each portion of the 2100 Hz detection portion 3, the 2400 Hz detection portion 4, the activity detection portion 6, the hangover generation portion 7 and the INFO0a signal detection portion 9, and performs the resetting of the signal discrimination state to the "voice" or the "data" according to the inputted judgment result.

The voice/data discrimination portion 2C first sets the signal discrimination state to the "data" in the case where the 2100 Hz tone is detected.

Further, in the case where the 2400 Hz tone is detected, when INFO0a signal has already been detected, the voice/data discrimination portion 2C judges that it is the tone of 2400 Hz sent in a data call by the V.34 modem and sets the signal discrimination state to the "data". On the other hand, in the case where the INFO0a signal has not yet been detected, the voice/data discrimination portion 2C judges that it is not the tone used in the data call by the V.34 modem, but, for example, the tone signal of 2400 Hz used in a line signalling of No. 5 signalling or a channel check test, and rests the signal discrimination state to the "voice".

The judgment result of the active/inactive state from the hangover generation portion 7 is used for detecting the end of the data call by the V.34 modem in the voice/data discrimination portion 2C.

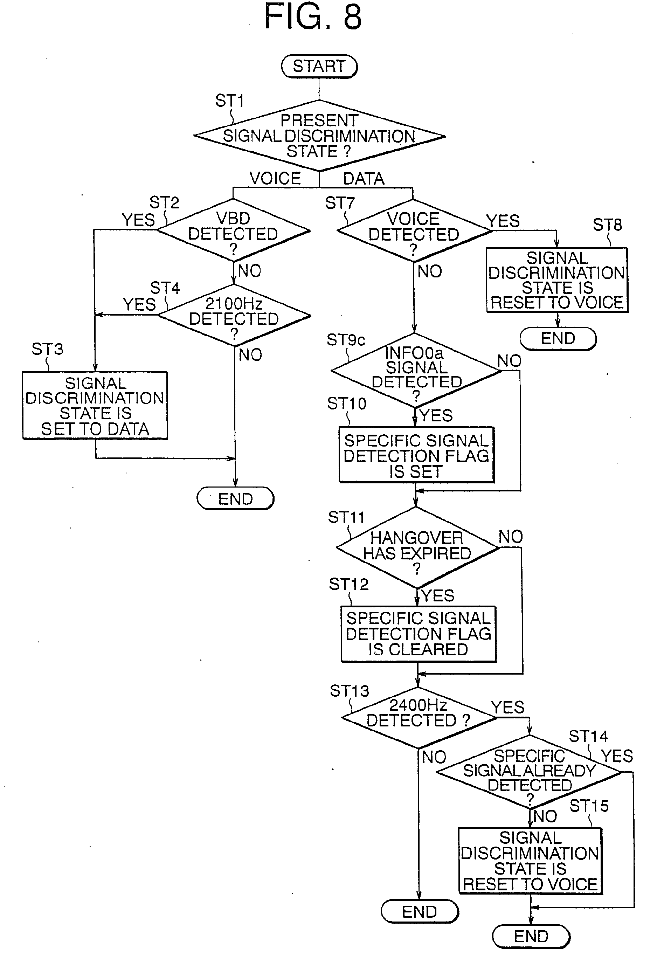

FIG. 8 is a flowchart for explaining the action of the voice/data discrimination portion 2C. Except for step ST9c, the action is the same as the action of the above described first embodiment described by using FIG. 2.

In the above described first embodiment (FIG. 2), in steps ST5 and ST9, the voice/data discrimination portion 2A checks the judgment result of the presence or absence of ANSam signal inputted from the ANSam signal detection portion 5, and in the case where the ANSam signal is detected, set the specific signal detection flag to 1. However, in the present embodiment (FIG. 8), the voice/data discrimination portion 2C checks the judgment result of the presence or absence of the INFO0a signal inputted from the INFO0a signal detection portion 9, and in the case where the INFO0a signal is detected, sets the specific signal detection flag to 1.

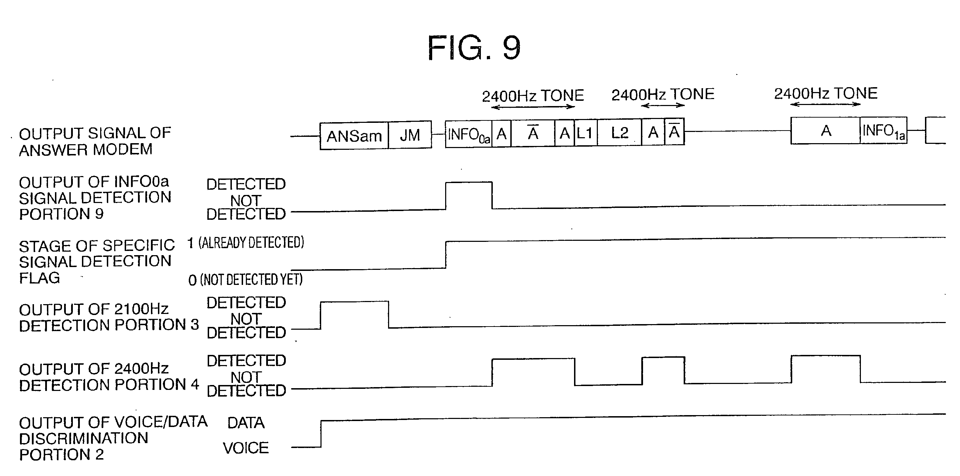

FIG. 9 is a drawing for explaining the action in the case where the V.34 modem signal is inputted to this signal discrimination portion 1C, and shows a state of each portion in the case where the output signal of the V.34 answer modem is inputted to this signal discrimination portion 1C.

In the drawing, when the answer modem sends the ANSam signal, since this ANSam signal is an amplitude-modulated tone signal of 2100 Hz and has a large power component at 2100 Hz, the 2100 Hz detection portion 3 detects the 2100 Hz tone, and in this way the voice/data discrimination portion 2C sets the discrimination result to the "data" state (steps ST3, ST4).

After that, since the INFO0a signal is sent from the answer modem, the INFO0a signal detection portion 9 detects the INFO0A signal, and the specific signal detection flag is set (steps ST9c, ST10).

After that, since the 2400 Hz tone is sent from the answer modem, the 2400 Hz detection portion 4 detects the 2400 Hz tone, but, since the specific signal detection flag is already set, the resetting of the signal discrimination state to the " voice" is not performed and the "data" state is maintained (steps ST13, ST14).

When the transmission of this V.34 modem signal completes, and after that, the inactive duration continues for more than a predetermined time, since the output of the hangover generation portion 7 becomes an inactive state, the specific signal detection flag is cleared to zero (steps ST11, ST12).

As described above, in the present second embodiment, means for detecting the INFO0a signal, as the specific signal to be used in the start-up procedure of the V.34 modem signal, is provided, and in the case where the INFO0a signal has been detected, the signal discrimination state is not reset to the "voice" even if the 2400 Hz tone is detected, so that there is the effect of preventing the signal discrimination result from becoming the "voice" during the transmission of the modem signal by the V.34 modulation system.

### Fifth Embodiment

In the above described first embodiment, means for detecting the ANSam signal in the V.8 procedure, as the specific signal to be used in the start-up procedure of the V.34 modem signal, is provided, and in the case where the ANSam signal has been detected, the signal discrimination state is not reset to the "voice" even if the 2400 Hz tone is detected. However, the detection of the ANSam signal may be replaced by the detection of the 2100 Hz tone.

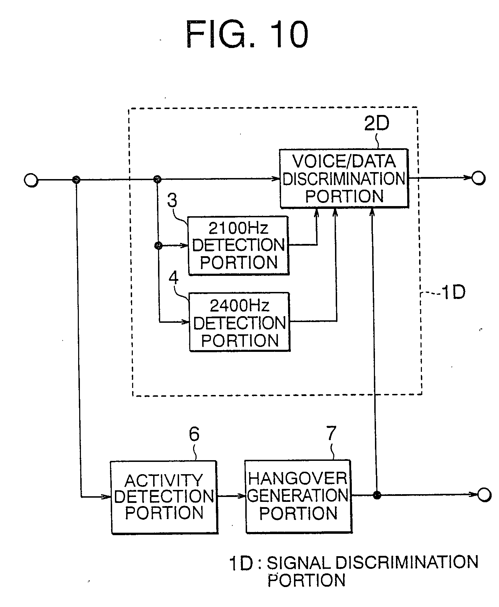

FIG. 10 is a block diagram showing the constitution of the fifth embodiment.

In the drawing, 1D denotes a signal discrimination portion, 2D a voice/data discrimination portion, 3 a 2100Hz detection portion, 4 a 2400 Hz detection portion, 6 an activity detection portion and 7 a hangover generation portion. Note that, here, components 1D, 6 and 7 substantially constitute the signal discrimination apparatus.

Next, the action of FIG. 10 will be described.

The actions of the 2100 Hz detection portion 3, the 2400 Hz detection portion 4, the activity detection portion 6 and the hangover generation portion 7 are the same as those of the first embodiment.

The voice/data discrimination portion 2D performs, for example, the analysis of the zero-crossing rate and the signal strength for the input signal so as to judge whether the type of the input signal is a voice signal ("voice") or a voice-band data signal ("data") and outputs the judgment result.

Further, the voice/data discrimination portion 2D inputs the judgment result of each portion of the 2100 Hz detection portion 3, the 2400 Hz detection portion 4 and the hangover generation portion 7 and performs the resetting of a signal discrimination state to the "voice" or the "data" according to the inputted judgment result.

The voice/data discrimination portion 2D first sets the signal discrimination state to the "data" in the case the 2100 Hz tone is detected.

Further, in the case where the 2400 Hz tone is detected, when the 2100 Hz tone signal has already been detected, the voice/data discrimination portion 2D judges that it is the 2400 Hz tone sent in a data call by the V.34 modem and sets the signal discrimination state to the "data". On the other hand, in the case where the 2100 Hz tone signal has not yet been detected, the voice/data discrimination portion 2D judges that it is not the tone used in the data call by the V.34 modem, but, for example, the tone signal of 2400 Hz used in a line signalling of No. 5 signalling or a channel check test, and resets the signal discrimination state to the "voice".

The judgment result of the active/inactive state from the hangover generation portion 7 is used for detecting the end of the data call by the V.34 modem in the voice/data discrimination portion 2D.

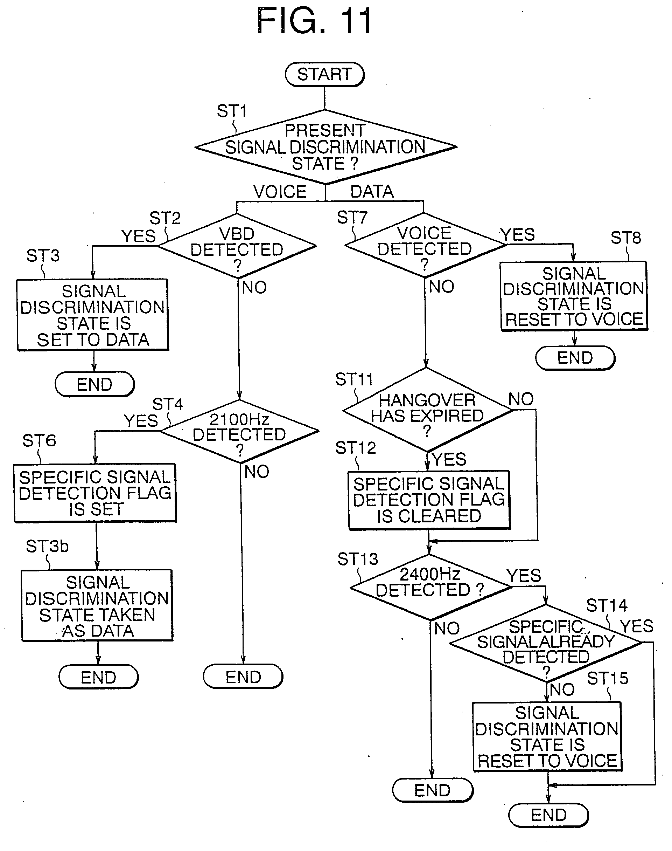

FIG. 11 is a flowchart for explaining the action of the voice/data discrimination portion 2D.

When the voice/data discrimination portion 2D starts the processing, it first checks the present signal discrimination state (step ST1), and in the case where the present signal discrimination state is a "voice" state, advances to step ST2, and in the case where the present signal discrimination state is a "data" state, advances to step ST7.

First, in the case where the present signal discrimination state is the "voice", the voice/data discrimination portion 2D performs, for example, the analysis of the zero-crossing rate and the signal strength for the input signal so as to judge the presence or absence of a voice-band data signal (VBD) (step ST2), and in the case where the voice-band data signal is detected, sets the signal discrimination state to the "data" (step ST3) and completes the processing.

In step ST2, in the case where the voice-band data signal is not detected, next, the voice/data discrimination portion 2D checks the judgment result of the presence or absence of the 2100 Hz tone inputted from the 2100 Hz detection portion 3 (step ST4), and in the case where the 2100 Hz tone is detected, sets the specific signal detection flag to 1 (step ST6), sets the signal discrimination state to the "data" (step ST3b), and completes the processing.

In step ST4, in the case where the 2100 Hz is not detected, the processing completes leaving the discrimination state as it is.

Next, in the case where the present signal discrimination state is "data", the voice/data discrimination portion 2D performs, for example, the analysis of the zero-crossing rate and the signal strength for the input signal so as to judge the presence or absence of the voice signal (step ST7), and in the case where the voice signal is detected, resets the signal discrimination state to the "voice" (step ST8), and completes the processing.

In step ST7, in the case where the voice signal is not detected, next, the voice/data discrimination portion 2D checks the judgment result of active/inactive state after the hangover generation processing inputted from the hangover generation portion 7 (step ST11), and in the case where the hangover time has expired and the state becomes inactive, clears the specific signal detection flag to zero (step ST12).

Next, the voice/data discrimination portion 2D checks the judgment result of the presence or absence of the 2400 Hz tone inputted from the 2400 Hz detection portion 4 (step ST13), and in the case where the 2400 Hz tone is detected, subsequently checks the state of the specific signal detection flag (step ST14), and in the case where the specific signal detection flag is not set to 1 (specific signal has not been detected yet), resets the signal discrimination state to the "voice" (step ST15), and completes the processing.

In step ST13, in the case where the 2400 Hz tone is not detected, the processing completes leaving the discrimination state as it is.

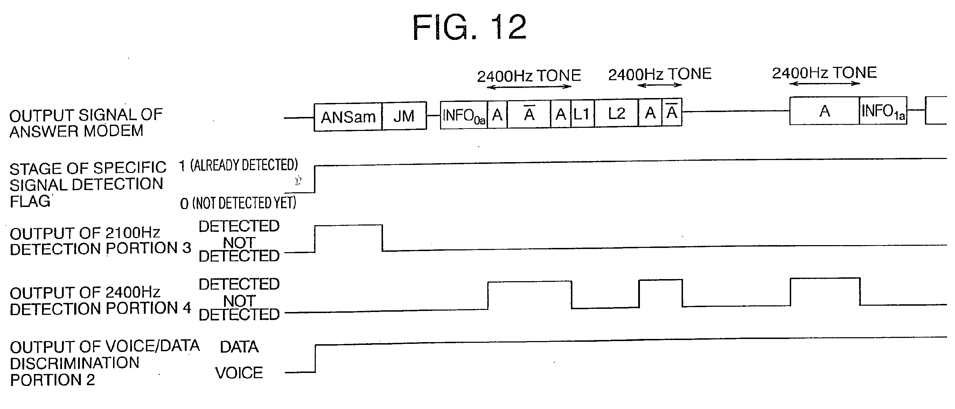

FIG. 12 is a drawing for explaining the action in the case where the V.34 modem signal is inputted to this signal discrimination portion 1D, and shows a state of each portion in the case where the output signal of the V.34 answer modem is inputted to this signal discrimination apparatus.

In the drawing, when the answer modem sends the ANSam signal, since this ANSam signal is an amplitude-modulated tone signal of 2100 Hz and has a large power component at 2100 Hz, the 2100 Hz detection portion 3 detects the 2100 Hz tone, and in this way the voice/data discrimination portion 2D sets the specific signal detection flag and sets the discrimination result to the "data"(steps ST3b, ST4, ST6).

After that, since the 2400 Hz tone is sent from the answer modem, the 2400 Hz detection portion 4 detects the 2400 Hz tone, but since the specific signal detection flag is already set, the resetting of the signal discrimination state to the "voice" is not performed and the "data" state is maintained (steps ST13, ST14).

When the transmission of this V.34 modem signal completes, and after that, the inactive duration continues for more than a predetermined time, since the output of the hangover generation portion 7 becomes an inactive state, the specific signal detection flag is cleared to zero (steps ST11, ST12).

As described above, in the present embodiment, instead of providing means for detecting the ANSam signal in the V.8 procedure as the specific signal to be used in the start-up procedure of the V.34 modem signal, that means is replaced by means for detecting the 2100 Hz tone and therefore the detection processing of the ANSam signal is not required and there is the effect of preventing the signal discrimination result from becoming the "voice" during the transmission of the modem signal by the V.34 modulation system.

### Sixth Embodiment

In the above described embodiments 1-5, in order to detect the end of the data call by the V.34 modem, the activity detection portion 6 and the hangover generation portion 7 are provided, and the active/inactive state of the input signal from the terminal side is judged, and in the case where the hangover time has expired, the specific signal detection flag is cleared to zero. However, being not only limited to this, the judgment, for example, of the active/inactive state in the both direction of the transmitting side and the receiving side may be also allowed.

That is, though not shown, a first activity detector for judging the active/inactive state of the transmitting side signal (input signal from the terminal side) and a second activity detector for judging the active/inactive state of the receiving side signal (input signal from the opposed equipment side) are provided, and in the case where an inactive state in the both direction of the transmitting side and the receiving side continues for a predetermined time, it is judged to be the end of the data call by the V.34 modem, and the specific signal detection flag may be cleared to zero.

By so doing, in contrast to the case where the active/inactive state of the transmitting side only is monitored, there is the effect of detecting the end of the data call by the V.34 modem in a short time.

### Seventh Embodiment

Further, by not detecting the end of the data call by the V.34 modem by monitoring the active/inactive state, but by detecting the tone signal of the specific frequency for a continuity check test of a channel which is transmitted at the beginning of a call, the end of the data call by the V.34 modem may be detected.

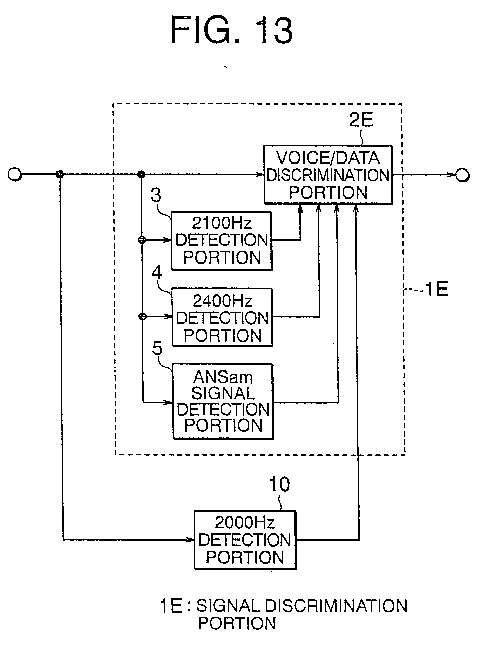

FIG. 13 is a block diagram showing the seventh embodiment of the invention.

In the drawing, 1E denotes a signal discrimination portion, 2E a voice/data discrimination portion as discrimination means, 3 a 2100 Hz detection portion, 4 a 2400 Hz detection portion, 5 an ANSam signal detection portion and 10 a 2000 Hz detection portion as a continuity check test tone detector. Note that, here, components 1E and 10 substantially constitute a signal discrimination apparatus.

Next, the action of FIG. 13 will be described. The actions of the 2100 Hz detection portion 3, the 2400 Hz detection portion 4 and the ANSam signal detection portion 5 are the same as those of the first embodiment.

The 2000 Hz detection portion 10 judges the presence or absence of the tone signal of 2000 Hz sent for the continuity check test of the channel at a call connection in a No. 6 signalling and a No. 7 signalling, and outputs the judgment result to the voice/data discrimination portion 2E.

The voice/data discrimination portion 2E inputs the judgment result of the 2000 Hz detection portion 10, and in the case where the 2000 Hz tone is detected, judges that the data call by the V.34 modem has already completed and that the next call has started, and clears the specific signal detection flag to zero.

The actions of the voice/data discrimination portion 2E and other portions are the same as those of the above described first embodiment.

As described above, in the present seventh embodiment, by detecting the 2000 Hz tone signal sent for the channel continuity check test, there is the effect of being able to detect the end of the data call by the V.34 modem.

### Eighth Embodiment

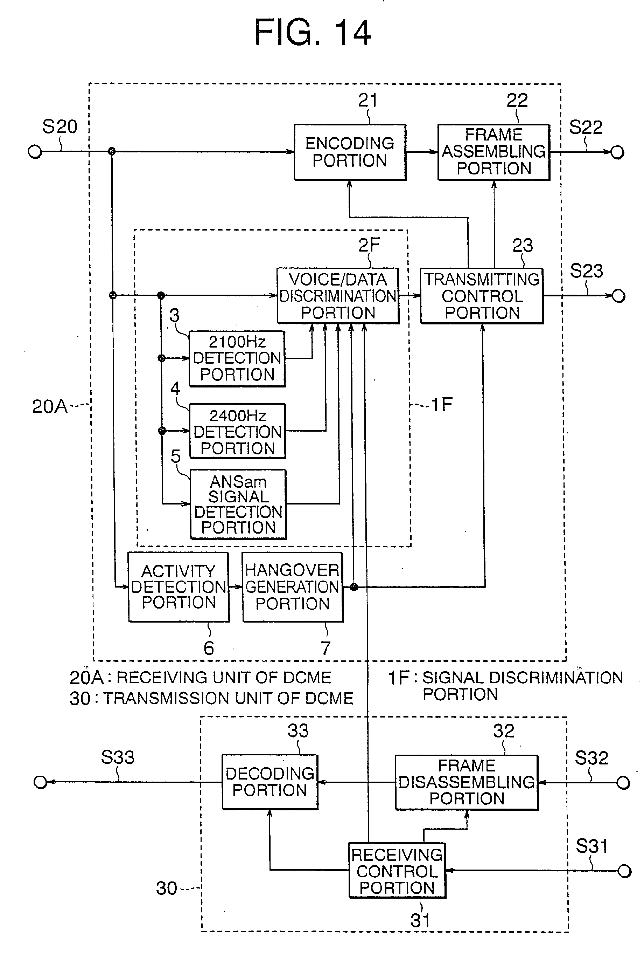

FIG. 14 is a block diagram showing the eighth embodiment of the signal discrimination apparatus.

In the drawing, 1F denotes a signal discrimination portion, 2F a voice/data discrimination portion as discrimination means, 3 a 2100 Hz detection portion, 4 a 2400 Hz detection portion, 5 an ANSam signal detection portion, 6 an activity detection portion, 7 a hangover generation portion, 20A a transmitting unit of a DCME, 21 an encoding portion as encoding means, 22 a frame assembling portion as transmission means, 23 a transmitting control portion, 30 a receiving unit of the DCME, 31 a receiving control portion, 32 a frame disassembling portion as receiving means, 33 an decoding portion as decoding means, S20 an input signal to the DCME, S22 a transmitted DCME frame, S23 a control information, S31 a control information, S32 a received DCME frame and S33 an output signal from the DCME. Note, here, components 1F, 6 and 7 substantially constitute the signal discrimination apparatus.

Next, the action of FIG. 14 will be described.

The input signals S20 to the DCME of M channels from the terminal side are inputted to the encoding portion 21, the signal discrimination portion 1F and the activity detection portion 6 in the transmitting unit 20A of the DCME.

The activity detection portion 6 performs the judgment as to whether each input signal S20 of M channels is active or inactive and outputs the judgment result to the hangover generation portion 7. The hangover generation portion 7 performs the hangover generation processing as described in the above described first embodiment, and outputs the active/inactive judgment result of each channel after the hangover generation processing to the voice/data discrimination portion 2F and the transmitting control portion 23.

The signal discrimination portion 1F performs the judgment as to whether each input signal S20 of M channels is the voice signal ("voice") or the voice band data signal ("data") and outputs the judgment result to the transmitting control portion 23. The detail of the action in the signal discrimination portion 1F is as described in the above described first embodiment. However, the voice/data discrimination portion 2F in the signal discrimination portion 1F inputs the discrimination state of the receiving side signal from the receiving control portion 31, and in the case where a leading edge of the discrimination state of the receiving side signal from the "voice" to the "data" is detected, sets the judgment result to the "data".

The encoding portion 21 has the m number (m is value smaller than M) of encoders and encodes the input signal in a low bit rate encoding fashion according to the instruction of the transmitting control portion 23 and outputs the encoded signal. As for an encoding algorism used by this encoding portion 21, there is, for example, an Adaptive Differential Pulse Code Modulation (hereinafter, referred to as ADPCM) system which is prescribed in the ITU-T Recommendation G.726, and in this ADPCM system, the input signal at a bit rate of 64 kbit/s can be encoded into any bit rate of 40 kbit/s, 32 kbit/s, 24 kbit/s, 16 kbit/s.

The transmitting control portion 23 assigns the channels judged to be active among the input signals S20 of M channels to the m number of encoders in the encoding portion 21 at a first priority based on the judgment result of the voice/data state and the judgment result of the active/inactive state, and further instructs the encoding portion 21 to set the encoding bit rate of the channels judged to be the "data" to 40 kbit/s and the encoding bit rate of the channels judged to be the "voice" to any one of 32 kbit/s, 24 kbit/s and 16 kbit/s.

Further, the transmitting control portion 23 notifies the frame assembling portion 22 about the control information regarding the assignment of the encoded signals of each channel outputted by the encoding portion 21 to the bits in a predetermined DCME frame, and the frame assembling portion 22 performs the assignment of the above described encoded signals of each channel to the bits in the above described DCME frame based on the control information and transmits the assembled data of the DCME frame S22 to the opposed equipment side.

Further, the transmitting control portion 23 transmits the control information S23 to the opposed equipment side regarding the assignment of the input signals of M channels to the encoders, the encoding bit rate in the ADPCM encoding, and the assignment of the encoded signals to the bits in the DCME frame.

The receiving control portion 31 in the receiving unit 30 of the DCME receives various types of the control information S31 which is sent from the transmitting control portion of the opposed equipment side, and based on the various types of the control information, outputs the control information to the frame disassembly portion 32 and the decoding portion 33.

Further, the receiving control portion 31 judges whether the discrimination state of the receiving side signal is the "voice" or the "data" based on the received control information S31 regarding the encoding bit rate of the ADPCM encoding and notifies the voice/data discrimination portion 2F about the judgment result.

The frame assembly portion 32 receives from the receiving control portion 31 the control information regarding the assignment of the bits in the DCME frame received from the opposed equipment side to the encoded data outputted to the decoding portion 33, and based on this control information, analyzes the DCME frame S32 received from the opposed equipment side and outputs the encoded signal to the decoding portion 33.

Next, the decoding portion 33 receives the control information regarding the encoding bit rate of each channel and the control information regarding the assignment of the m number of decoders in the decoding portion 33 to the outputs of M channels from the DCME from the receiving control portion 31, and based on the control information, assigns the encoded signals received from the frame disassembling portion 32 to any of the m number of decoders in the decoding portion 33 and decodes them at an adequate encoding bit rate, and assigns the decoded signals from each channel to any of M channels of the outputs from the DCME, and outputs them as output signals S33.

As described above, in the present embodiment, means for detecting the specific signal used in the start-up procedure of the V.34 modem signal in the signal discrimination apparatus is provided, and in the case where the above described specific signal has been detected, the signal discrimination state is not reset to the "voice" even if the 2400 Hz tone is detected, so that the signal judgment result is prevented from becoming the "voice" during the transmission of the modem signal by the V.34 modulation system and so there is the effect of being able to obtain the transmission equipment capable of normally transmitting the V.34 modem signal.

### Ninth Embodiment

In the above described embodiments 1-8, means for detecting the signal to be used in the start-up procedure of the V.34 modem signal is provided as the means for detecting the specific signal, and in the case where the signal in the start-up procedure of the V.34 modem signal has been detected, the signal discrimination state is not reset to the "voice" even if the 2400 Hz tone is detected. However, not only the signal in the V.34 procedure, but also other signal used in the start-up procedure of the modem signal, for example, the signal in the V.90 procedure or V.92 procedure, may be detected.

## Claims

1. A signal discrimination apparatus for classifying a type of an input signal into a voice and a data, the discrimination apparatus comprising:
first detection means for detecting a tone signal of a specific frequency from said input signal;
second detection means for detecting a specific signal used in a start-up procedure of a modem signal from said input signal; and
discrimination means for classifying the type of said input signal based on outputs of said first and second detection means;
wherein, when said specific signal has not been detected, a signal discrimination result in the case of said tone signal being detected is made to be a voice state, and when said specific signal has been detected, a signal discrimination result in the case of said tone signal being detected is not made to be a voice state.

2. The signal discrimination apparatus according to claim 1, wherein said start-up procedure is a V.34 procedure.

3. The signal discrimination apparatus according to claim 1, wherein said start-up procedure is a V.8 procedure.

4. The signal discrimination apparatus according to claim 1, wherein said second detection means is an ANSam signal detector for detecting the ANSam signal in the V.8 procedure.

5. The signal discrimination apparatus according to claim 4, wherein, instead of said ANSam signal detector, third detection means for detecting a tone signal of a specific frequency from said input signal is used.

6. The signal discrimination apparatus according to claim 5, wherein the tone signal of the specific frequency which said third detection means detects is a tone signal of 2100 Hz.

7. The signal discrimination apparatus according to claim 1, wherein the tone signal of the specific frequency which said first detection means detects is a tone signal of 2400 Hz.

8. A signal discrimination method for classifying a type of an input signal into a voice and a data,
said signal discrimination method including:
a first step of detecting a tone signal of a specific frequency from said input signal:
a second step of detecting a specific signal used in a start-up procedure of a modem signal from said input signal; and
a third step of setting a specific signal detection flag when said specific signal is detected,
wherein, when said specific signal detection flag is not set, a signal discrimination result in the case of the tone signal of said specific frequency being detected is made to be a voice state, and when said specific signal detection flag is set, a signal discrimination result in the case of the tone signal of said specific frequency being detected is not made to be a voice state.

9. The signal discrimination method according to claim 8, wherein the tone signal of the specific frequency detected in said first step is a tone signal of 2400 Hz.

10. A transmission equipment comprising:
a signal discrimination apparatus according to claim 1 for classifying a type of an input signal into a voice and a data;
encoding means for encoding said input signal at an adequate encoding bit rate in a low bit rate encoding fashion based on a signal discrimination result of said signal discrimination apparatus;
transmitting means for transmitting encoded data encoded by said encoding means;
receiving means for receiving the encoded data sent by an opposed equipment side; and
decoding means for decoding the encoded data received from said receiving means.
